# EUROPÄISCHE PATENTANMELDUNG

(11) **EP 1 933 237 A1**
(43) Veröffentlichungstag der Anmeldung: **18.06.2008**
(21) Anmeldenummer: 06026089.0
(22) Anmeldetag: 15.12.2006
(51) Int. Cl.: G06F 11/34

(54) **Computerimplementiertes System zur Analyse, Verwaltung, Beherrschung, Bewirtschaftung und Überwachung einer komplexen Hardware-/Softwarearchitektur**

(71) Anmelder: UBS AG, 8001 Zürich (CH)
(72) Erfinder: Weber, Thomas, 9000 St. Gallen (CH)
(74) Vertreter: Schmidt, Steffen

(57) **Zusammenfassung**

Ein Verfahren zur Ausführung in einem Computernetzwerk aus mehreren Knotenrechnern sowie einer Mehrzahl Programm-Komponenten, die verteilt auf einem der Knotenrechner instanziiert sind und mit vorbestimmten Eingabeparametern zum Ansprechen eine Funktionalität dieser Programm-Komponente sowie mit vorbestimmten Ausgabeparametern nach ihrer Ausführung, wobei durch Kommunikation mit diesen Programm-Komponenten Zustandsinformationen von Softwareprogramm-Ressourcen und/oder durch Kommunikation mit Hardware-Ressourcen im Computernetzwerk, nämlich über die Architektur des Computernetzwerkes, den Ausrüstungsstand der Hardware-Ressourcen des Computernetzwerkes, Ereignis- und Fehlermeldungen der Hardware-Ressourcen des Computernetzwerkes, den Entwicklungsstand oder die Version der Softwareprogramm-Komponenten, das Laufzeitverhalten der Softwareprogramm-Komponenten, Ereignisse und Fehler der Softwareprogramm-Komponenten, den Datenfluss zwischen einzelnen Softwareprogramm-Komponenten und / oder Hardware-Ressourcen des Computernetzwerkes, und/oder Einführungs- und Änderungsanforderungen und - informationen zu den Hardware-Ressourcen des Computernetzwerkes oder den Softwareprogramm-Komponenten, mit zeitlichen, räumlichen, funktionalen und/oder strukturellen Deskriptoren erfasst, in einer Datenbank gespeichert und in Abhängigkeit von Anfragen in einem oder mehreren vereinheitlichten Ausgabeformaten ausgegeben werden.

## Beschreibung

### Hintergrund der Erfindung

Viele Unternehmen basieren ihr Geschäft auf vernetzte Computer, in denen eine Vielzahl von durch Benutzer aufgerufene Anwendungs-Computerprogramme über Middleware, Betriebssysteme, und andere Computerprogrammkomponenten auf Ressourcen (Hardware oder Software oder Infrastruktur) eines Netzwerkes aus Computern zugreifen. Aber auch ein IP-basierter (IP = Internet Protocol) Zugriff auf Ressourcen in dem Netzwerk aus Computern findet zunehmend Verbreitung, um Geschäftsabläufe (=Prozesse) in einer IT-Landschaft zu realisieren und auszuführen.

Diese Situation resultiert auch daraus, dass bisher für eine bestimmte Applikation in der Regel Computerprogramme eingesetzt werden, in denen die geforderte Prozessfunktionalität komplett enthalten ist. So ist es möglich, dass eine andere Applikation eine ähnliche oder die gleiche Funktionalität benötigt. In diesem Fall wurde diese Funktionalität parallel / redundant implementiert. Der große Vorteil dieser Lösung ist die Unabhängigkeit. Jedes Applikations-Computerprogramm zur Implementierung eines Prozesses kann individuell weiterentwickelt und betrieben werden.

Demgegenüber wird heute zunehmend nach dem Konzept redundanzfreier Applikationen gearbeitet, bei denen ein Softwaresystem in wieder verwendbare Komponenten aufgeteilt ist. Darüber hinaus wird durch Schnittstellen, welche von diesen Komponenten angeboten werden, die Wieder-/Mehrfachverwendbarkeit dieser Komponenten erhöht. Die Folge und das Ziel sind hierbei redundanzfreie und hoch wieder verwendbare Systeme mit komplexen Abhängigkeiten der wieder verwendbaren Komponenten. Das heißt, dass die geforderten Funktionalitäten in autonomen Komponenten implementiert werden, welche von unterschiedlicher Seite aufgerufen und verwendet werden können. Dies hat neben den geringeren Wartungskosten den Vorteil, dass sichergestellt ist, dass auch nur eine Ausprägung einer Funktionalität existiert. Das heißt, dass zwei Applikations-Programmkomponenten 'A' und 'B' das identische Ergebnis erhalten, das von nur einer autonomen Komponente 'C' geliefert wird. Ersichtlich resultieren neben den Vorteilen dieses Ansatzes besonders die mannigfaltigen Abhängigkeiten, die eine erhöhte Komplexität verursachen. Dabei treten unter anderem folgende Fragen auf: Was geschieht bei 'A' oder 'B', wenn die autonom entwickelte Komponente 'E' modifiziert wird? Welche Applikations-Programmkomponenten sind von einer Änderung betroffen? Was geschieht, wenn die autonome Komponente 'C' einen Fehler beinhaltet?

### Der Erfindung zugrunde liegende technische Probleme

Insbesondere bei größeren, auch geographisch weiter verteilten Komponenten des Computernetzwerkes wird auch bei dem Konzept redundanzfreier Applikationen Softwaresystem nicht zuletzt aus Gründen der Leistungsfähigkeit (performance) und der Ausfallminimierung des Computernetzwerkes einzelne Ressourcen mehrfach vorgehalten. Dabei ist es essentiell, dass die mehrfach vorgehaltenen Ressourcen tatsächlich identisch zueinander sind. Sonst wären im Betrieb schwer nachvollziehbare Fehler die Folge: Man stelle sich vor, ein Computerprogramm für einen komplizierten Berechnungsvorgang ist nur vermeintlich identisch auf zwei Servern in dem Computernetzwerk vorhanden. Ein Anwendungscomputerprogramm, dessen Anfrage für eine Berechnung durch das Netzwerkprotokoll zu einem Zeitpunkt zu einer ersten Instanz des Computerprogramms geleitet (geroutet) wird und zu einem anderen Zeitpunkt zu einer zweiten Instanz des Computerprogramms, liefert, von praktisch kaum nachvollziehbaren Zufällen abhängig, unterschiedliche Ergebnisse. Vergleichbares gilt bei lediglich scheinbar identischen Hardwarekomponenten (Prozessoren, Netzwerk-Kanälen, etc.). Der Zugriff eines ersten Computerprogramms über einen hoch belasteten Netzwerk-Kanal auf einen Server mit einem zweiten Computerprogramm zur Ausführen einer Berechnung oder einer Datenbankabfrage kann zu einer Zeitüberschreitung (Time-out) bei dem anfragenden Computerprogramm führen, während der Zugriff des ersten Computerprogramms über einen niedriger belasteten Netzwerk-Kanal auf einen anderen Server mit einer anderen Instanz des zweiten Computerprogramms dem anfragenden Computerprogramm die Berechnung oder die Datenbankabfrage problemlos (da innerhalb der erwarteten Zeitspanne) liefert.

Weiterhin wird es zunehmend schwieriger, auf Grund der immer komplexer werdenden Abhängigkeiten der Hard- und Software-Systeme und deren Abhängigkeiten zu einander Auswirkungen einer (Hard- oder Software-) Änderung auf andere Software oder Hardware zu erkennen.

Ein weiteres Problem ist der Umstand, dass derzeit im Rahmen der Konzeptionierung und Umsetzung von Computerprogrammen diese oft mit Funktionalitäten versehen werden, deren Nutzen/Relevanz für den tatsächlichen Einsatz nur schwer in die Planungen einbeziehbar ist. So ist zum Beispiel nur schwer abschätzbar, in welchen Intervallen bestimmte Funktionen oder autonome Komponenten aufgerufen werden, wie lange ihre Laufzeiten sind, welche anderen autonomen Komponenten sie ihrerseits aufrufen, welche Datenflüsse sie hervorrufen / benötigen, oder dergl.

Es ist zwar bekannt, im Rahmen von Simulationen bestimmte Faktoren abzuschätzen und die Informationen aus hoch spezialisierten Software-Werkzeugen (Tools) bei der Planung, Erstellung, Installation, Überwachung etc. einzubeziehen. Allerdings liefern diese bekannten Software-Werkzeuge nur jeweils begrenzte, nicht vernetzte Aspekte.

### Erfindungsgemäße Lösung

Zur Lösung dieser Probleme ist erfindungsgemäß ein computerimplementiertes System vorgesehen in einem Netzwerk aus mehreren Knotenrechnern sowie einer Mehrzahl Programm-Komponenten, die verteilt auf einem der Knotenrechner instanziiert sind und jeweils eine vorbestimmte Schnittstelle haben, wobei gemäß der Schnittstelle festgelegt ist, mit welchen Eingaben eine Funktionalität dieser Softwareprogramm-Komponente anzusprechen ist, und welche Ausgaben die jeweilige Funktionalität diese Softwareprogramm-Komponente nach ihrer Ausführung bereitstellt, wobei das System erfindungsgemäß eine Softwareprogramm -Programm-Komponente Anwendungslandschaft vorhält, die durch Kommunikation mit diesen Softwareprogramm-Komponenten Zustandsinformationen von Softwareprogramm- und/oder Hardware-Ressourcen im Computernetzwerk, nämlich über die Architektur des Computernetzwerkes, den Ausrüstungsstand der Hardware-Ressourcen des Computernetzwerkes, Ereignis- und Fehlermeldungen der Hardware-Ressourcen des Computernetzwerkes, den Entwicklungsstand oder die Version der Softwareprogramm-Komponenten, das Laufzeitverhalten der Softwareprogramm-Komponenten, Ereignisse und Fehler der Softwareprogramm-Komponenten, den Datenfluss zwischen einzelnen Softwareprogramm-Komponenten und / oder Hardware-Ressourcen des Computernetzwerkes, und/oder Einführungs-und Änderungsanforderungen und -informationen zu den Hardware-Ressourcen des Computernetzwerkes oder den Softwareprogramm-Komponenten, mit zeitlichen, räumlichen, funktionalen und/oder strukturellen Deskriptoren erfasst, vorzugsweise in einer Datenbank speichert und in Abhängigkeit von Anfragen in einem oder mehreren vereinheitlichten Ausgabeformaten ausgibt.

Dieses computerimplementierte System erlaubt insbesondere in komplexen IT-Landschaften eine effizientere und sicherere Aufdeckung von Fehlern sowie die Analyse / Behebung von Fehlerursachen als die bisherige Herangehensweise. Insbesondere unterstützt diese erfindungsgemäße computerimplementierte System die Architekturkonzeption, die Entwicklung, die Integration und die Austestung, den Betrieb, das Ereignis- und Fehlermanagement, sowie eine Überwachung komplexer IT-Landschaften.

Mit anderen Worten stellt die Erfindung ein Konzept bereit, wie alle erforderlichen / verfügbaren Informationen über die Software, Software-Versionen, die Hardware, Datenflüsse, Entwicklungs-Informationen, Überwachungs-Informationen, etc.) aus den existierenden und aus neuen Tools vereinheitlicht und, zur Beherrschung der Komplexität, mit ihren Abhängigkeiten innerhalb einer Computer-Programmkomponente Anwendungslandschaft (Application Landscape) grafisch darstellt. Dabei wird eine einheitliche, statische oder dynamische Datenstruktur zur Erfassung der IT-Assets (Hardware, Software, Infrastruktur) und deren Betrieb (Prozesse, Dienste, Ressourcen) verwendet. Es werden Datenströme und Anforderungen hinsichtlich ihres Volumens, ihrer Anfall-/Auftrittseigenschaften (zeitlich, von woher nach wohin) und die Abläufe von Programmen automatisch erfasst und überwacht. Mit den dabei gewonnenen Daten werden Fehler und Ausfälle untersucht und minimiert und Abhängigkeiten zwischen einzelnen Programm-Komponenten und / oder Hardware-Ressourcen des Computernetzwerkes erkannt. Basierend hierauf kann Änderungsbedarf ermittelt und können Änderungen konzipiert werden. So ist zum Beispiel erkennbar, ob eine Programm-Komponente oder ein Hardware-Asset innerhalb einer bestimmten Zeitspanne von mehreren Seiten angefordert wird, so dass es zu Wartezeiten bei den einzelnen Anforderungen kommt. Als Abhilfe kann dann zum Beispiel eine oder mehrere weitere Instanzen der Programm-Komponente auf unterschiedlichen Servern zur Verfügung gestellt werden, wodurch sich die Wartezeiten reduzieren und die Gesamt-Leistungsfähigkeit des Systems überproportional steigt.

Ein Ergebnis, das dieses System liefern kann, besteht darin, dass Abhängigkeiten zwischen einzelnen Komponenten oder Assets sehr schnell erkannt und analysiert werden können, so dass deren Einflüsse auf geplante oder gewünschte Änderungen vorhersehbarer sind; außerdem ist es möglich, durch die Auswertung der anfallenden statistischen Daten und der anfallenden Ereignisdaten die Effizienz von Programmen bzw. die Auslastung von Hardwareassets zu steigern oder zu optimieren.

Eine Programm-Komponente kann, in Abhängigkeit von ihrer Komplexität eine einfache Funktion oder Prozedur, ein technische Komponente, oder dergl. sein, aber auch ein vielschichtiger und anspruchsvoller Geschäftsdienst (Business-Service), der seinerseits auf eine Vielzahl einfacherer Programm-Komponenten zugreift.

Dabei wird erfindungsgemäß ein integraler mehrstufiger Ansatz gewählt:
(i) Bereits in der Grobplanung / Strukturierung einer Programm-Komponente und deren Beziehungen zu anderen Programm-Komponenten werden die relevanten (statischen) Daten elektronisch strukturiert und dokumentiert.
(ii) Dies wird weitergeführt bei der Programmierung / Codierung einer Programm-Komponente, bei einerseits auf diese relevanten Daten zurückgegriffen, und andererseits diese Daten in ihrer Darstellung verfeinert und ergänzt werden um Funktionsaufrufe, Parameterübergabe, dynamische Attribute, etc.
(iii) Während der Lebensdauer der Programm-Komponente werden diese Daten auch noch um Versionsinformationen, Laufzeitverhalten, etc. ergänzt.
(iv) Zur Laufzeit der Programm-Komponente werden diese Daten herangezogen um das statische und das dynamische Verhalten der Programm-Komponente mit von dieser abgegebenen Log-Datei-Einträgen durch die Computer-Programmkomponente Anwendungslandschaft ausgewertet, verifiziert und in der geeigneten Weise ausgegeben.

Die Ausgabe erfolgt in einer die Beziehungen zu / Abhängigkeiten von anderen Ressourcen im Computernetzwerk wiedergebenden Art.

Dabei kann eine statische, dynamische, und/oder hierarchische Ausgabe der Zustandsinformationen erfolgen. Die Kommunikation zwischen der Computer-Programm-komponente Anwendungslandschaft mit den Programm-Komponenten kann zu den Zustandsinformationen in Stapelverarbeitung und/oder Echtzeit erfolgen.

Das Anzeigen der Programm-Komponente, für die der Computer-Programmkomponente Anwendungslandschaft als Zustandsinformation ein Betriebsfehler kommuniziert wurde, erfolgt vorzugsweise zusammen mit den von der Programm-Komponente abhängigen Computer-Programmkomponenten und / oder deren involvierten Hardware-Ressourcen des Computernetzwerkes. Von der Computer-Programmkomponente abhängige Computer-Programmkomponenten sind dabei solche, die der Computer-Programmkomponente Informationen zum Beispiel auf Aufforderung zuliefern. Involvierte Hardware-Ressourcen sind solche, die zur Ausführung der Computer-Programmkomponente bzw. deren Kommunikation mit abhängigen Computer-Programm-komponenten herangezogen werden.

Das Anzeigen der Programm-Komponente, für die der Computer-Programmkomponente Anwendungslandschaft als Zustandsinformation ein Benutzerfehler kommuniziert wurde, erfolgt vorzugsweise zusammen mit deren abhängigen Computer-Programmkomponenten, aktuellen Datensätzen und / oder deren involvierten Hardware-Ressourcen des Computernetzwerkes.

Das Anzeigen kann ein Service-Qualitäts-Maß (QoS) einer Programm-Komponente sowie einer Leistungsstatistik einschließlich der durchschnittlichen Reaktionszeit (SollIst), der minimalen Reaktionszeit (Soll -- Ist), der maximalen Reaktionszeit (SollIst), des letzter Zugriffszeitpunktes, der Anzahl der Zugriffe pro Zeiteinheit, etc. umfassen.

### Detaillierte Beschreibung der Erfindung

Das computerimplementierte System gemäß der Erfindung dient dazu, in komplexen IT-Landschaften eine effizientere und sicherere Aufdeckung von Fehlern sowie die Analyse / Behebung von Fehlerursachen als die bisherige Herangehensweise. Insbesondere unterstützt diese erfindungsgemäße computerimplementierte System die Architekturkonzeption, die Entwicklung, die Integration und die Austestung, den Betrieb, das Ereignis- und Fehlermanagement, sowie eine Überwachung komplexer IT-Landschaften. Ergebnisse, die durch das erfindungsgemäße computerimplementierte System erfasst, aufbereitet und zur graphischen Darstellung bereitgestellt werden, umfassen die graphische Visualisierung einer komplexen IT-Landschaft mit ihren Hardware-, Software-, und Infrastrukturkomponenten einschließlich ihres Zustandes, Betriebskonformität- (=Governance), IT Service Management, Entwicklung, Abhängigkeiten der Hardware/ Software Komponenten voneinander, Software Versionsmanagement, der für die jeweilige Komponenten Verantwortlichen (Eigner, Service, Unterstützung), und ihren Beziehungen untereinander.

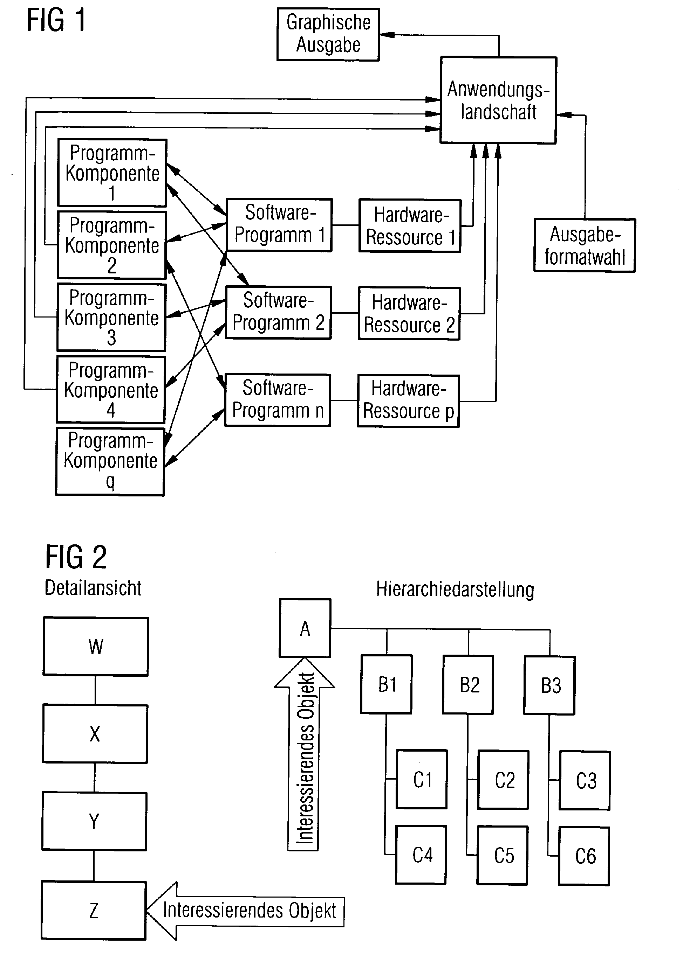

Wie in Fig. 1 global veranschaulicht, sind in einer IT-Landschaft mehrere SoftwareProgramme 1 ... n vorhanden, die ihrerseits auf unterschiedliche Hardware-Ressourcen 1 ... p zugreifen und auch jeweils mit unterschiedlichen Programm-Komponenten 1 ... q kommunizieren, d.h. über festgelegte Schnittstellen Ausgangsdaten liefern und Eingangsdaten erhalten. Dabei werden Daten entweder direkt ausgetauscht, d.h. ein Software-Programm benötigt ein Ergebnis einer Berechnung und schickt dazu zum Beispiel an eine Bibliothek mit Funktionalitäten die Kennung der gewünschten Funktionalität sowie die für diese Funktionalität erforderlichen Eingangsdaten. Die Bibliothek wählt die entsprechende Funktionalität aus und übergibt die Eingangsdaten. Die Eingangsdaten werden von der Funktionalität verarbeitet und die Ausgangsdaten von der Bibliothek an die Schnittstelle des Software-Programms zurückgereicht. Über diesen Vorgang gibt erfindungsgemäß sowohl das Software-Programm eine Nachricht an die Anwendungslandschaft, als auch die Programm-Komponente, in der die Bibliothek instanziert ist. Alternativ dazu kann der Datenaustausch auch über Dateien erfolgen, die in Datenbanken abgelegt werden und auf die wechselweise schreibend/lesend zugegriffen wird. Auch in diesem Fall gibt sowohl das Software-Programm als auch die Programm-Komponente über ihre jeweiligen Aktivitäten eine entsprechende Nachricht an die Anwendungslandschaft.

In der Anwendungslandschaft werden diese Nachrichten erfasst, geordnet, in einer Datenbank gespeichert, anhand von Regeln aus einem Regel-Pool ausgewertet und auf Anfrage in Abhängigkeit von der Ausgabeformatwahl an eine graphische Ausgabe (Bildschirm, Drucker, und/oder Plotter) gesendet.

Wie in Fig. 2 veranschaulicht, erfolgt die Ausgabe eines Objektes zur klaren und eindeutigen Zuordenbarkeit in stets gleicher Ansicht. Ein Objekt kann dabei ein beliebiges IT-Asset, ein Programm, eine Hardwarekomponente, oder eine Infrastrukturkomponente, oder eine Eigenschaft/Beschreibung davon sein. In Abhängigkeit von der gewünschten Darstellung kann zwischen einer Detailansicht und einer Hierarchiedarstellung gewählt werden, in der das interessierende Objekt wahlweise als nachrangiges Objekt (Detailansicht) oder als vorrangiges Objekt (Hierarchiedarstellung) gezeigt ist. Dabei bestimmt sich durch das interessierende Objekt der jeweilige Einstiegspunkt in die Darstellungswahl.

Ein weiteres Kriterium bei der Ausgabeformatwahl ist die Art der interessierenden Fragestellung. Dabei kommen folgende Fragestellungen in Betracht:
1.) Darstellen einer Fehlerursache und deren Abhängigkeiten bei einer Betriebsstörung
   a. Welche Komponente zeigt ein fehlerhafte Verhalten und welche Dienste nimmt diese Komponente in Anspruch und von welchen Diensten wird diese Komponente in Anspruch genommen
   b. Welche Komponente zeigt ein suboptimales Verhalten und welche Transaktionen sind davon betroffen
2.) Darstellen der Abhängigkeiten und Vernetzungen (zur Einarbeitung, Schulung, etc.)
3.) Darstellen der IT-Landschaft zur Durchführung von Einfluss-Analysen
   a. Software
      i. Welche Komponenten / welche Dienste sind betroffen wenn eine Komponente ausfällt
      ii. Welche Komponenten / welche Dienste sind betroffen wenn eine Komponente nur eingeschränkt verfügbar ist
      iii. Welchen Einfluss auf die Komponenten / Dienste i, j, k hat es, die Komponente m mehrfach verfügbar zu haben
      iv. Welche Zeit benötigt eine Komponente zur Bereitstellung eines Dienstes
   b. Hardware / Infrastruktur
      i. Welche Bereiche sind betroffen, wenn das Rechnersystem X ausfällt
      ii. Welche Bereiche sind betroffen, wenn das Netzwerk Y nur eine reduzierte Kapazität hat
      iii. Was verändert sich bei Bereitstellung einer erweiterten Kapazität

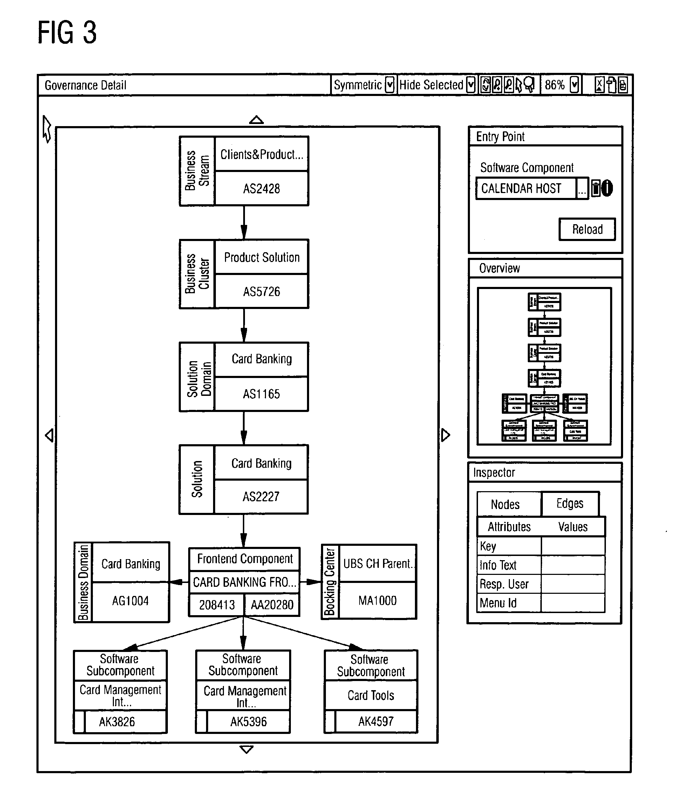

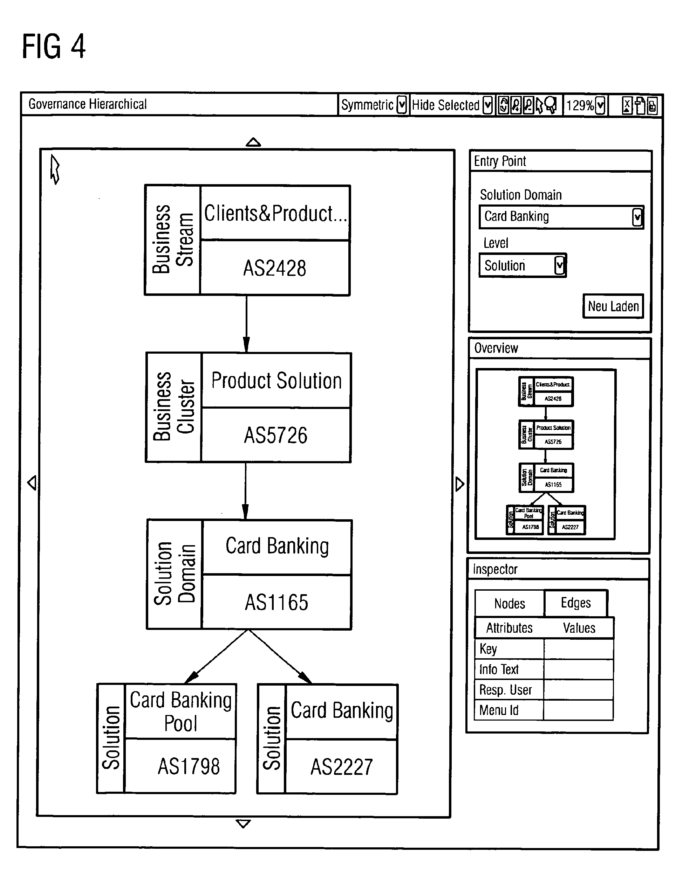

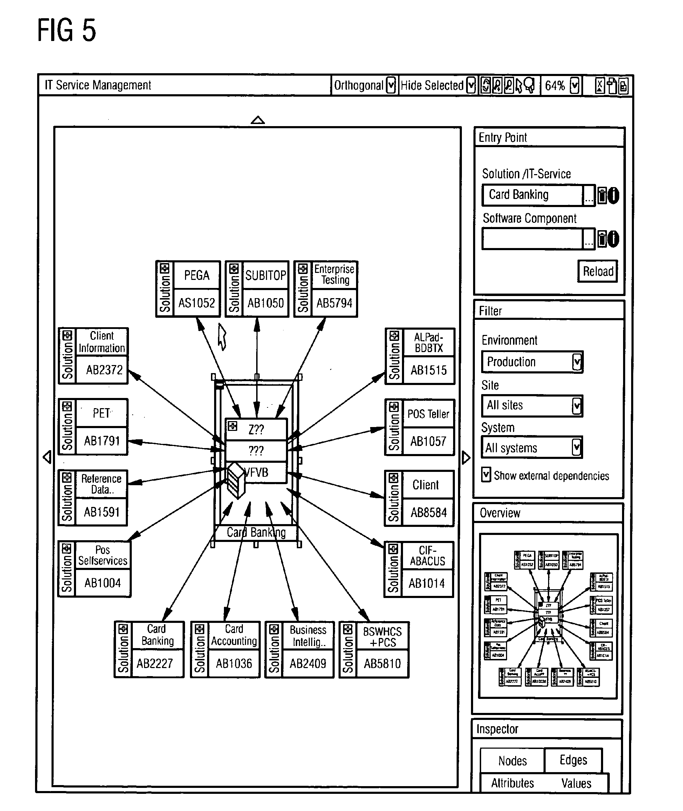

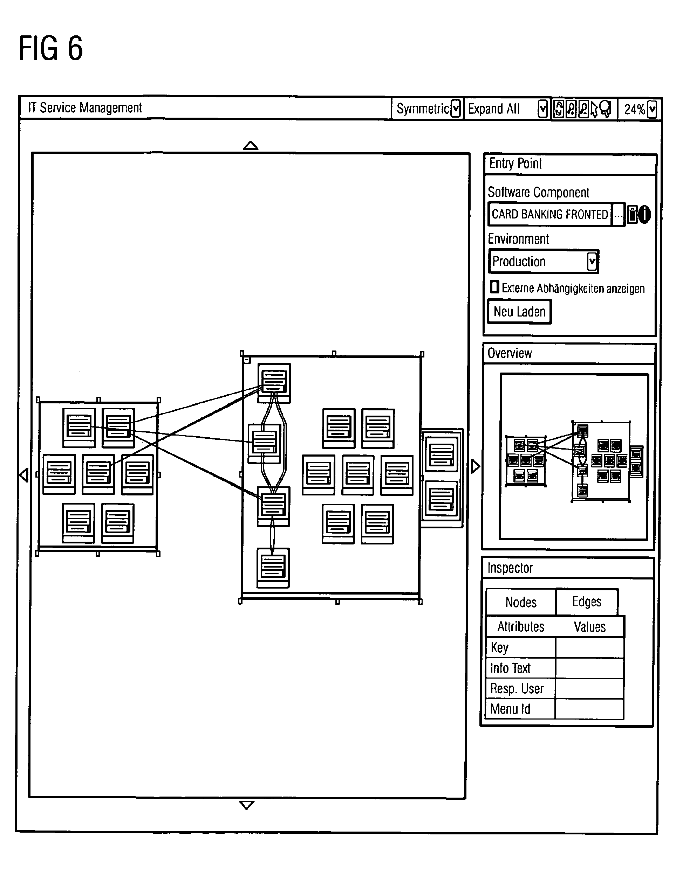

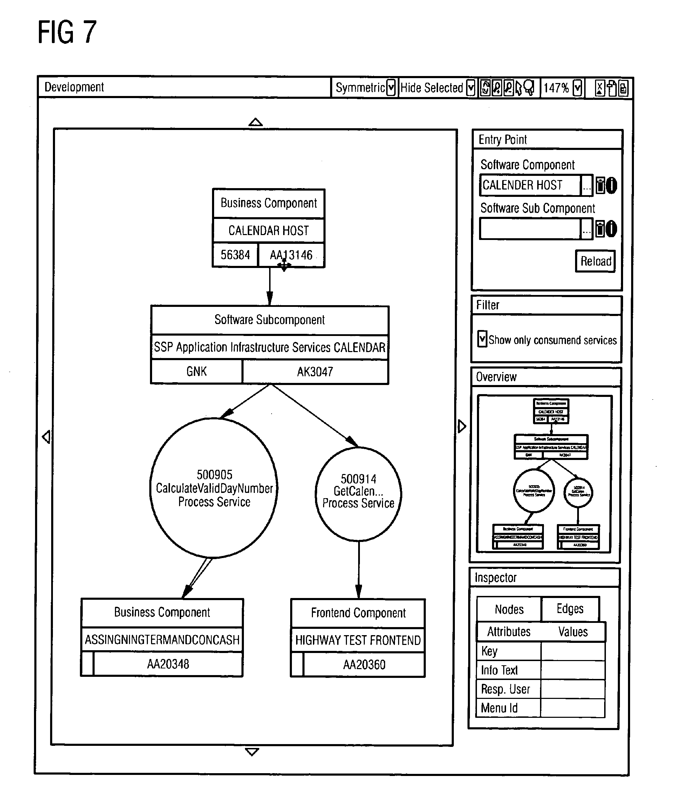

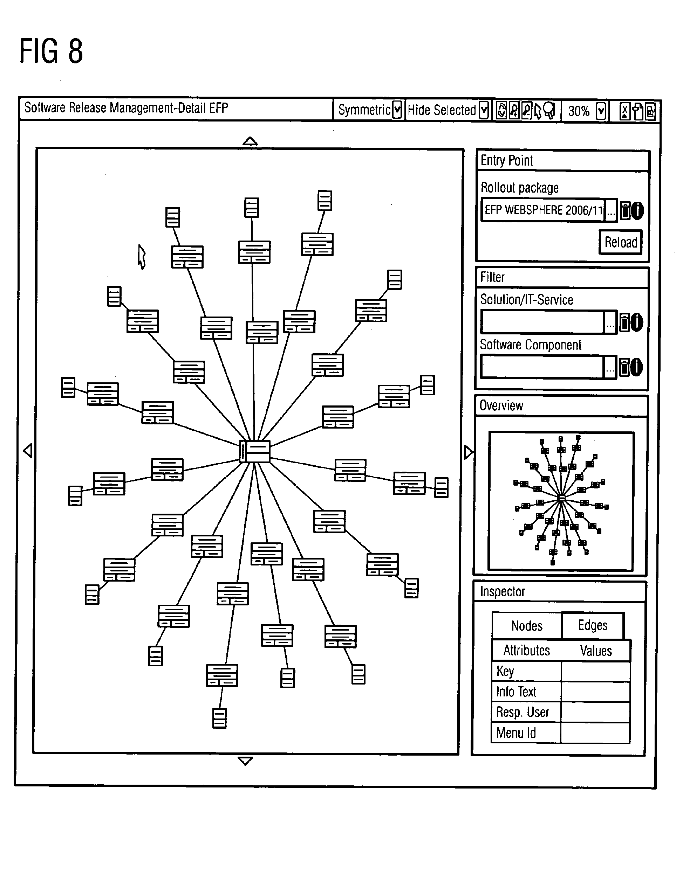

In den Fig. 3 - 8 sind unterschiedliche Darstellungen abhängig von der Ausgabeformatwahl veranschaulicht, in denen aus organisatorischer Sicht die Domäne eines Software-Programms, die Programmlösung und die Programmkomponenten in unterschiedlichem Detaillierungsgrad und Focus der Sichtweise veranschaulicht sind. Dabei ist jeweils in einem großen Fenster eine vergrößerte Einzelheitenansicht und in einem kleineren Fenster eine Übersichtsansicht gezeigt. Fig. 3 zeigt zum Beispiel die Detailansicht der Betriebskonformität einer Frontend-Komponente "Card Banking" mit ihrer unmittelbaren Umgebung, also den Komponenten die auf sie zugreifen, bzw. auf die sie zugreift. Die Fig. 4 zeigt zum Beispiel eine hierarchische Ansicht der Betriebskonformität mehrerer Komponenten mit ihrer unmittelbaren Umgebung, also den Komponenten die auf sie zugreifen, bzw. auf die sie zugreifen in einem größeren Umfeld. Die Fig. 5 zeigt zum Beispiel eine hierarchische Ansicht zum IT Service Management mehrerer Hardware-Komponenten mit ihrer unmittelbaren Umgebung, also den Komponenten die auf sie zugreifen, bzw. auf die sie zugreifen. Die Fig. 6 zeigt zum Beispiel eine hierarchische Ansicht zum IT Service Management mehrerer Software-Komponenten mit ihrer unmittelbaren Umgebung, also den Komponenten die auf sie zugreifen, bzw. auf die sie zugreifen. Fig. 7 zeigt die höchstrangige Komponente einer Programmlösung, in diesem Beispiel "Calender Host" im Entwicklungsstadium. Schließlich veranschaulicht Fig. 8 Freigabestadien (Software Release Management) von unterschiedlichen Programm-Komponenten auf der Detaillierungsebene Geschäftsapplikation. Es versteht sich, dass diese Sichten nur exemplarisch sind und auch weitere Sichten im Rahmen der erfindungsgemäßen Konzeption zu realisieren sind. Dabei erlauben die unterschiedlichen Sichten auch ein Einblenden / Ausblenden von einzelnen Aspekten in Abhängigkeit vom Einstiegspunkt [Entry Point], von kontextabhängigen Filterkategorien ([Solution / IT-Service], [Software Component], [Environment], etc.)

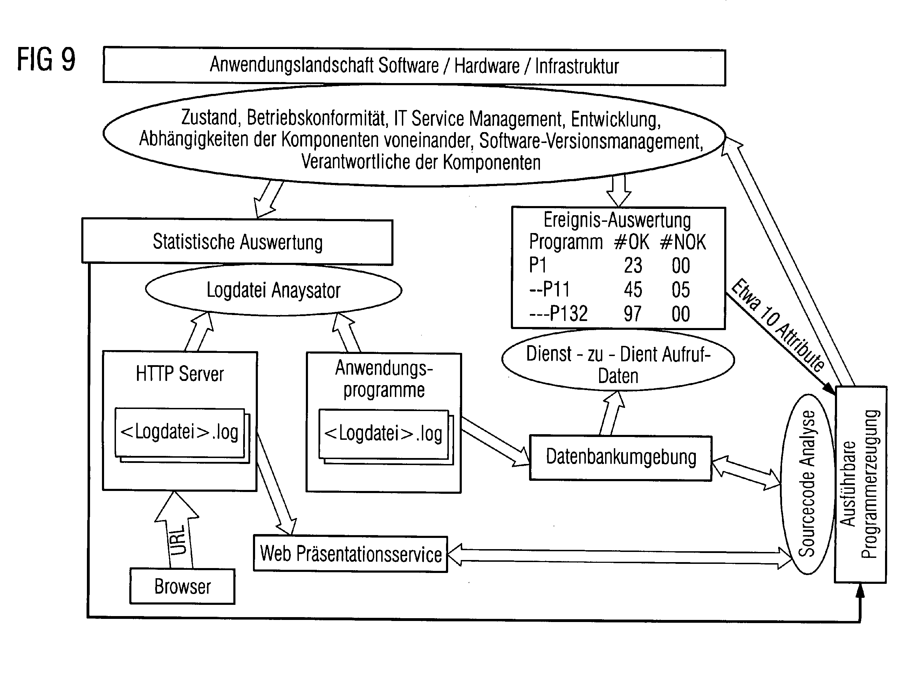

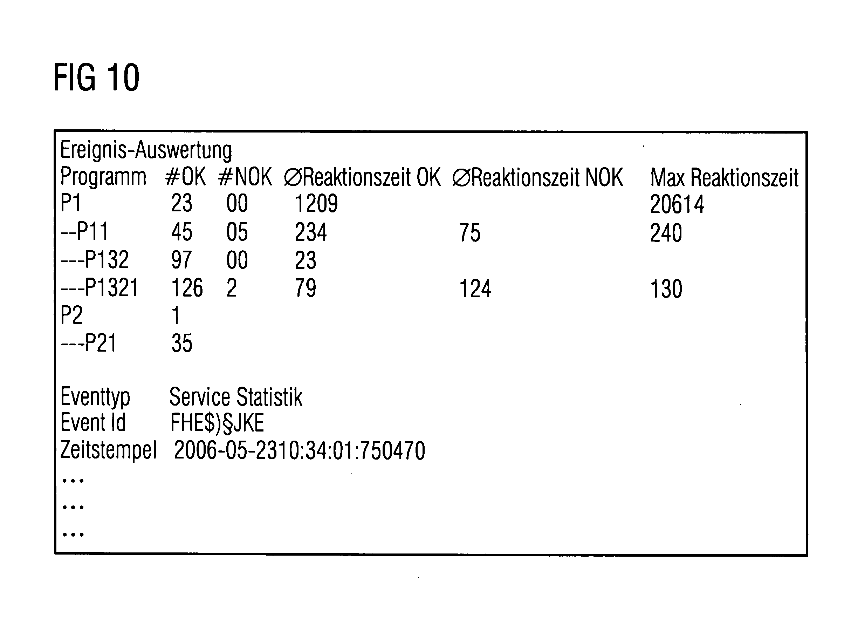

In Fig. 9 ist das Zusammenspiel in dem computerimplementierten System veranschaulicht, bei dem Softwareprogramm-Komponenten während ihrer Ausführung Zustandsinformationen zu der Ausführung in Logdateien (oder Agenten) eintragen. Diese Logdateien werden einer Statistik-Auswertung unterzogen. Daneben werden alle Datenbankzugriffe und Service-Zugriffe auf eine Datenbankumgebung und auf die anderen Komponenten in einer Ereignis-Auswertung registriert und überprüft, wobei die jeweiligen Programm-Komponenten, die Anzahl ihrer Aufrufe, sowie die sie aufrufenden Programm-Komponenten und das Resultat der Verarbeitung (OK/NOK), Verarbeitungsdauer, etc. protokolliert wird. Die Version der Softwareprogramm-Komponenten, deren Laufzeitverhalten, mit ihnen zusammenhängende Ereignisse und/oder Fehler, den Datenfluss zwischen einzelnen Softwareprogramm-Komponenten und / oder Hardware-Ressourcen des Computernetzwerkes, etc. werden mit zeitlichen, räumlichen, funktionalen und/oder strukturellen Deskriptoren erfasst und aufbereitet. Diese Informationen aus der Statistik-Auswertung und aus der Ereignis-Auswertung (jeweils bis zu etwa 10 Attribute für jedes Ereignis/Statistikeintrag) werden einer Quellcodeanalyse zugeführt. Die Ergebnisse der Quellcodeanalyse werden um Software-Entwicklungsdaten angereichert und zur Ausgabe durch die Anwendungslandschaft weitergegeben. In der Anwendungslandschaft kann auch eine Speicherung erfolgen um die Ergebnisse in Abhängigkeit von Anfragen in einem oder mehreren vereinheitlichten Ausgabeformaten ausgegeben. Dabei enthält die Anwendungslandschaft auch einen Regel-Pool, anhand dessen festgelegt ist, was als Fehler zu werten ist, wann welche Daten von den einzelnen Datenquellen übernommen werden oder von diesen abgefragt werden, etc.

## Patentansprüche

1. Computerimplementiertes System in einem Computernetzwerk aus mehreren Knotenrechnern sowie einer Mehrzahl Programm-Komponenten, die verteilt auf einem der Knotenrechner instanziiert sind und jeweils eine vorbestimmte Schnittstelle haben, wobei gemäß der Schnittstelle festgelegt ist, mit welchen Eingaben eine Funktionalität dieser Programm-Komponente anzusprechen ist, und welche Ausgaben die jeweilige Funktionalität diese Programm-Komponente nach ihrer Ausführung bereitstellt, wobei das System eine Computer-Programmkomponente Anwendungslandschaft vorhält, die durch Kommunikation mit diesen Programm-Komponenten Zustandsinformationen von Softwareprogramm- und/oder Hardware-Ressourcen im Computernetzwerk, nämlich über
* die Architektur des Computernetzwerkes,
* den Ausrüstungsstand der Hardware-Ressourcen des Computernetzwerkes,
* Ereignis- und Fehlermeldungen der Hardware-Ressourcen des Computernetzwerkes,
* den Entwicklungsstand oder die Version der Softwareprogramm-Komponenten,
* das Laufzeitverhalten der Softwareprogramm-Komponenten,
* Ereignisse und Fehler der Softwareprogramm-Komponenten,
* den Datenfluss zwischen einzelnen Softwareprogramm-Komponenten und / oder Hardware-Ressourcen des Computernetzwerkes, und/oder
* Einführungs- und Änderungsanforderungen und -informationen zu den Hardware-Ressourcen des Computernetzwerkes oder den Softwareprogramm-Komponenten, mit zeitlichen, räumlichen, funktionalen und/oder strukturellen Deskriptoren erfasst, in einer Datenbank speichert und in Abhängigkeit von Anfragen in einem oder mehreren vereinheitlichten Ausgabeformaten ausgibt.

2. Computerimplementiertes System nach Anspruch 1, bei dem das System erforderliche / verfügbare Informationen über die IT-Assets wie Software, Software-Versionen, die Hardware, die Hardware-Versionen, Datenflüsse, Entwicklungs-Informationen, Überwachungs-Informationen, vereinheitlicht und zur Beherrschung der Komplexität mit ihren jeweiligen Abhängigkeiten innerhalb einer Computer-Programmkomponente Anwendungslandschaft zur Auswertung grafisch darstellt, wobei eine einheitliche, statische oder dynamische Datenstruktur zur Erfassung der IT-Assets und deren Betrieb verwendet.

3. Computerimplementiertes System nach Anspruch 1 oder 2, bei dem das System Datenströme und Anforderungen hinsichtlich ihres Volumens, ihrer Anfall-/Auftrittseigenschaften und die Abläufe von Programmen automatisch erfasst und überwacht um mit den dabei gewonnenen Daten Fehler und Ausfälle zu untersuchen und zu optimieren und Abhängigkeiten zwischen einzelnen Programm-Komponenten und / oder Hardware-Ressourcen des Computernetzwerkes zu erkennen.

4. Computerimplementiertes System nach einem der Ansprüche 1 bis 3, bei dem eine Programm-Komponente, in Abhängigkeit von ihrer Komplexität eine einfache Funktion oder Prozedur, ein technische Komponente, oder dergl. sein, aber auch ein vielschichtiger und anspruchsvoller Geschäftsdienst (Business-Service), der seinerseits auf eine Vielzahl einfacherer Programm-Komponenten zugreift.

5. Computerimplementiertes System nach einem der Ansprüche 1 bis 4, bei dem
(i) in der Grobplanung / Strukturierung einer Programm-Komponente und deren Beziehungen zu anderen Programm-Komponenten werden die relevanten (statischen) Daten elektronisch strukturiert und dokumentiert werden;
(ii) bei der Programmierung / Codierung einer Programm-Komponente, einerseits auf diese relevanten Daten zurückgegriffen, und andererseits diese Daten präzisiert und ergänzt werden um Funktionsaufrufe, Parameterübergabe, dynamische Attribute, etc.;
(iii) während der Lebensdauer der Programm-Komponente diese Daten um Versionsinformationen, Laufzeitverhalten, etc. ergänzt werden;
(iv) zur Laufzeit der Programm-Komponente diese Daten herangezogen um das statische und das dynamische Verhalten der Programm-Komponente mit von dieser abgegebenen Log-Datei-Einträgen durch die Computer-Programmkomponente Anwendungslandschaft auszuwerten, zu verifizieren und in der geeigneten Weise auszugeben.

6. Computerimplementiertes System nach einem der Ansprüche 1 bis 5, bei dem die Ausgabe in einer die Beziehungen zu / Abhängigkeiten von anderen Ressourcen im Computernetzwerk wiedergebenden Art erfolgt, und/oder eine statische, dynamische, und/oder hierarchische Ausgabe der Zustandsinformationen umfasst.

7. Computerimplementiertes System nach einem der Ansprüche 1 bis 6, bei dem die Kommunikation zwischen der Computer-Programmkomponente Anwendungslandschaft mit den Programm-Komponenten zu den Zustandsinformationen in Stapelverarbeitung und/oder Echtzeit erfolgt.

8. Computerimplementiertes System nach einem der Ansprüche 1 bis 7, bei dem die Programm-Komponente, für die der Computer-Programmkomponente Anwendungslandschaft als Zustandsinformation ein Betriebsfehler kommuniziert wurde, zusammen mit deren abhängigen Computer-Programmkomponenten und / oder deren involvierten Hardware-Ressourcen des Computernetzwerkes angezeigt wird.

9. Computerimplementiertes System nach einem der Ansprüche 1 bis 8, bei dem die Programm-Komponente, für die der Computer-Programmkomponente Anwendungslandschaft als Zustandsinformation ein Benutzerfehler kommuniziert wurde, vorzugsweise zusammen mit deren abhängigen Computer-Programmkomponenten, aktuellen Datensätzen und / oder deren involvierten Hardware-Ressourcen des Computernetzwerkes angezeigt wird.

10. Computerimplementiertes System nach einem der Ansprüche 1 bis 9, bei dem ein Anzeigen eines Service-Qualitäts-Maßes (QoS) einer Programm-Komponente sowie einer Leistungsstatistik einschließlich der durchschnittlichen Reaktionszeit (Soll -- Ist), der minimalen Reaktionszeit (Soll -- Ist), der maximalen Reaktionszeit (Soll -- Ist), des letzten Zugriffszeitpunktes, der Anzahl der Zugriffe pro Zeiteinheit, etc. erfolgt.

11. Verfahren zur Ausführung in einem Computernetzwerk aus mehreren Knotenrechnern sowie einer Mehrzahl Programm-Komponenten, die verteilt auf einem der Knotenrechner instanziiert sind und mit vorbestimmten Eingabeparametern zum Ansprechen eine Funktionalität dieser Programm-Komponente sowie mit vorbestimmten Ausgabeparametern nach ihrer Ausführung, wobei durch Kommunikation mit diesen Programm-Komponenten Zustandsinformationen von Softwareprogramm-Ressourcen und/oder durch Kommunikation mit Hardware-Ressourcen im Computernetzwerk, nämlich über
* die Architektur des Computernetzwerkes,
* den Ausrüstungsstand der Hardware-Ressourcen des Computernetzwerkes,
* Ereignis- und Fehlermeldungen der Hardware-Ressourcen des Computernetzwerkes,
* den Entwicklungsstand oder die Version der Softwareprogramm-Komponenten,
* das Laufzeitverhalten der Softwareprogramm-Komponenten,
* Ereignisse und Fehler der Softwareprogramm-Komponenten,
* den Datenfluss zwischen einzelnen Softwareprogramm-Komponenten und / oder Hardware-Ressourcen des Computernetzwerkes, und/oder
* Einführungs- und Änderungsanforderungen und -informationen zu den Hardware-Ressourcen des Computernetzwerkes oder den Softwareprogramm-Komponenten, mit zeitlichen, räumlichen, funktionalen und/oder strukturellen Deskriptoren erfasst, in einer Datenbank gespeichert und in Abhängigkeit von Anfragen in einem oder mehreren vereinheitlichten Ausgabeformaten ausgegeben werden.

12. Verfahren nach Anspruch 11, bei dem erforderliche / verfügbare Informationen über die IT-Assets wie Software, Software-Versionen, die Hardware, die Hardware-Versionen, Datenflüsse, Entwicklungs-Informationen, Überwachungs-Informationen, vereinheitlicht und zur Beherrschung der Komplexität mit ihren jeweiligen Abhängigkeiten innerhalb einer Computer-Programmkomponente Anwendungslandschaft zur Auswertung grafisch darstellt, wobei eine einheitliche, statische oder dynamische Datenstruktur zur Erfassung der IT-Assets und deren Betrieb verwendet.

13. Verfahren nach Anspruch 11 oder 12, bei dem Datenströme und Anforderungen hinsichtlich ihres Volumens, ihrer Anfall-/Auftrittseigenschaften und die Abläufe von Programmen automatisch erfasst und überwacht werden um mit den dabei gewonnenen Daten Fehler und Ausfälle zu untersuchen und zu minimieren und Abhängigkeiten zwischen einzelnen Programm-Komponenten und / oder Hardware-Ressourcen des Computernetzwerkes zu erkennen.

14. Verfahren nach einem der Ansprüche 11 bis 13, bei dem eine Programm-Komponente, in Abhängigkeit von ihrer Komplexität eine einfache Funktion oder Prozedur, ein technische Komponente, oder dergl. sein, aber auch ein vielschichtiger und anspruchsvoller Geschäftsdienst (Business-Service), der seinerseits auf eine Vielzahl einfacherer Programm-Komponenten zugreift.

15. Computerimplementiertes System nach einem der Ansprüche 11 bis 14, bei dem
(i) in der Grobplanung / Strukturierung einer Programm-Komponente und deren Beziehungen zu anderen Programm-Komponenten werden die relevanten (statischen) Daten elektronisch strukturiert und dokumentiert werden;
(ii) bei der Programmierung / Codierung einer Programm-Komponente, einerseits auf diese relevanten Daten zurückgegriffen, und andererseits diese Daten präzisiert und ergänzt werden um Funktionsaufrufe, Parameterübergabe, dynamische Attribute, etc.;
(iii) während der Lebensdauer der Programm-Komponente diese Daten um Versionsinformationen, Laufzeitverhalten, etc. ergänzt werden;
(iv) zur Laufzeit der Programm-Komponente diese Daten herangezogen um das statische und das dynamische Verhalten der Programm-Komponente mit von dieser abgegebenen Log-Datei-Einträgen durch die Computer-Programmkomponente Anwendungslandschaft auszuwerten, zu verifizieren und in der geeigneten Weise auszugeben.

16. Computerimplementiertes System nach einem der Ansprüche 11 bis 15, bei dem die Ausgabe in einer die Beziehungen zu / Abhängigkeiten von anderen Ressourcen im Computernetzwerk wiedergebenden Art erfolgt.

17. Computerimplementiertes System nach einem der Ansprüche 11 bis 16, bei dem die Ausgabe eine statische, dynamische, und/oder hierarchische Ausgabe der Zustandsinformationen umfasst.

18. Computerimplementiertes System nach einem der Ansprüche 11 bis 17, bei dem die Kommunikation zwischen der Computer-Programmkomponente Anwendungslandschaft mit den Programm-Komponenten zu den Zustandsinformationen in Stapelverarbeitung und/oder Echtzeit erfolgt.

19. Computerimplementiertes System nach einem der Ansprüche 11 bis 18, bei dem die Programm-Komponente, für die der Computer-Programmkomponente Anwendungslandschaft als Zustandsinformation ein Betriebsfehler kommuniziert wurde, zusammen mit deren abhängigen Computer-Programmkomponenten und / oder deren involvierten Hardware-Ressourcen des Computernetzwerkes angezeigt wird.

20. Computerimplementiertes System nach einem der Ansprüche 11 bis 19, bei dem die Programm-Komponente, für die der Computer-Programmkomponente Anwendungslandschaft als Zustandsinformation ein Benutzerfehler kommuniziert wurde, vorzugsweise zusammen mit deren abhängigen Computer-Programmkomponenten, aktuellen Datensätzen und / oder deren involvierten Hardware-Ressourcen des Computernetzwerkes angezeigt wird.

21. Computerimplementiertes System nach einem der Ansprüche 11 bis 20, bei dem ein Anzeigen eines Service-Qualitäts-Maßes (QoS) einer Programm-Komponente sowie einer Leistungsstatistik einschließlich der durchschnittlichen Reaktionszeit (Soll -- Ist), der minimalen Reaktionszeit (Soll -- Ist), der maximalen Reaktionszeit (Soll -- Ist), des letzten Zugriffszeitpunktes, der Anzahl der Zugriffe pro Zeiteinheit, etc. erfolgt.

22. Computerprogrammprodukt, welches dazu ausgelegt ist, das Verfahren nach einem der vorhergehenden Ansprüche auszuführen wenn es von einem Computer oder einem Computer-Netzwerk ausgeführt wird.

## Geänderte Patentansprüche

### Geänderte Patentansprüche gemäss Regel 137(2) EPÜ.

**1.** Computerimplementiertes System in einem Computernetzwerk aus mehreren Knotenrechnern sowie einer Mehrzahl Programm-Komponenten, die verteilt auf einem der Knotenrechner instanziiert sind und jeweils eine vorbestimmte Schnittstelle haben, wobei durch die Schnittstelle festgelegt ist, mit welchen Eingaben eine Funktionalität dieser Programm-Komponente anzusprechen ist, und welche Ausgaben die jeweilige Funktionalität diese Programm-Komponente nach ihrer Ausführung bereitstellt, wobei das System eine Computer-Programmkomponente Anwendungslandschaft vorhält, die ausgebildet ist, um durch Kommunikation mit diesen Programm-Komponenten Zustandsinformationen von Softwareprogramm- und/oder Hardware-Ressourcen im Computernetzwerk, nämlich über
* die Architektur des Computernetzwerkes,
* den Ausrüstungsstand der Hardware-Ressourcen des Computernetzwerkes,
* Ereignis- und Fehlermeldungen der Hardware-Ressourcen des Computernetzwerkes,
* den Entwicklungsstand oder die Version der Softwareprogramm-Komponenten,
* das Laufzeitverhalten der Softwareprogramm-Komponenten,
* Ereignisse und Fehler der Softwareprogramm-Komponenten,
* den Datenfluss zwischen einzelnen Softwareprogramm-Komponenten und / oder Hardware-Ressourcen des Computernetzwerkes, und/oder
* Einführungs- und Änderungsanforderungen und -informationen zu den Hardware-Ressourcen des Computernetzwerkes oder den Softwareprogramm-Komponenten,
in Form von zeitlichen, räumlichen, funktionalen und/oder strukturellen Deskriptoren zu erfassen, in einer Datenbank zu speichern und in Abhängigkeit von einer Ausgabeformatwahl in einem oder mehreren vereinheitlichten Ausgabeformaten auszugeben; wobei
(i) in der Grobplanung / Strukturierung einer Programm-Komponente und deren Beziehungen zu anderen Programm-Komponenten die relevanten (statischen) Daten elektronisch strukturiert und dokumentiert werden;
(ii) bei der Programmierung / Codierung einer Programm-Komponente, einerseits auf diese relevanten Daten zurückgegriffen, und andererseits diese Daten präzisiert und ergänzt werden um Funktionsaufrufe, Parameterübergabe, dynamische Attribute, etc.;
(iii) während der Lebensdauer der Programm-Komponente diese Daten um Versionsinformationen, Laufzeitverhalten, etc. ergänzt werden; und wobei
(iv) die Computer-Programmkomponente Anwendungslandschaft ausgebildet ist, um zur Laufzeit der Programm-Komponente diese Daten heranzuziehen, um das statische und das dynamische Verhalten der Programm-Komponente mit von dieser abgegebenen Log-Datei-Einträgen auszuwerten, zu verifizieren und in der geeigneten Weise auszugeben.

**2.** Computerimplementiertes System nach Anspruch 1, bei dem das System erforderliche / verfügbare Informationen über die IT-Assets wie Software, Software-Versionen, die Hardware, die Hardware-Versionen, Datenflüsse, Entwicklungs-Informationen, Überwachungs-Informationen, vereinheitlicht und zur Beherrschung der Komplexität mit ihren jeweiligen Abhängigkeiten innerhalb einer Computer-Programmkomponente Anwendungslandschaft zur Auswertung grafisch darstellt, wobei eine einheitliche, statische oder dynamische Datenstruktur zur Erfassung der IT-Assets und deren Betrieb verwendet.

**3.** Computerimplementiertes System nach Anspruch 1 oder 2, bei dem das System Datenströme und Anforderungen hinsichtlich ihres Volumens, ihrer Anfall-/Auftrittseigenschaften und die Abläufe von Programmen automatisch erfasst und überwacht um mit den dabei gewonnenen Daten Fehler und Ausfälle zu untersuchen und zu optimieren und Abhängigkeiten zwischen einzelnen Programm-Komponenten und / oder Hardware-Ressourcen des Computernetzwerkes zu erkennen.

**4.** Computerimplementiertes System nach einem der Ansprüche 1 bis 3, bei dem eine Programm-Komponente, in Abhängigkeit von ihrer Komplexität eine einfache Funktion oder Prozedur, ein technische Komponente, oder dergl. sein, aber auch ein vielschichtiger und anspruchsvoller Geschäftsdienst (Business-Service), der seinerseits auf eine Vielzahl einfacherer Programm-Komponenten zugreift.

**5.** Computerimplementiertes System nach einem der Ansprüche 1 bis 4, bei dem die Ausgabe in einer die Beziehungen zu / Abhängigkeiten von anderen Ressourcen im Computernetzwerk wiedergebenden Art erfolgt, und/oder eine statische, dynamische, und/oder hierarchische Ausgabe der Zustandsinformationen umfasst.

**6.** Computerimplementiertes System nach einem der Ansprüche 1 bis 5, bei dem die Kommunikation zwischen der Computer-Programmkomponente Anwendungslandschaft mit den Programm-Komponenten zu den Zustandsinformationen in Stapelverarbeitung und/oder Echtzeit erfolgt.

**7.** Computerimplementiertes System nach einem der Ansprüche 1 bis 6, bei dem die Programm-Komponente, für die der Computer-Programmkomponente Anwendungslandschaft als Zustandsinformation ein Betriebsfehler kommuniziert wurde, zusammen mit deren abhängigen Computer-Programmkomponenten und / oder deren involvierten Hardware-Ressourcen des Computernetzwerkes angezeigt wird.

**8.** Computerimplementiertes System nach einem der Ansprüche 1 bis 7, bei dem die Programm-Komponente, für die der Computer-Programmkomponente Anwendungslandschaft als Zustandsinformation ein Benutzerfehler kommuniziert wurde, vorzugsweise zusammen mit deren abhängigen Computer-Programmkomponenten, aktuellen Datensätzen und / oder deren involvierten Hardware-Ressourcen des Computernetzwerkes angezeigt wird.

**9.** Verfahren zur Ausführung in einem Computernetzwerk aus mehreren Knotenrechnern sowie einer Mehrzahl Programm-Komponenten, die verteilt auf einem der Knotenrechner instanziiert sind und jeweils eine vorbestimmte Schnittstelle haben, wobei durch die Schnittstelle festgelegt ist, mit welchen Eingaben eine Funktionalität dieser Programm-Komponente anzusprechen ist, und welche Ausgaben die jeweilige Funktionalität diese Programm-Komponente nach ihrer Ausführung bereitstellt" wobei durch Kommunikation mit diesen Programm-Komponenten Zustandsinformationen von Softwareprogramm-Ressourcen und/oder durch Kommunikation mit Hardware-Ressourcen im Computernetzwerk, nämlich über
* die Architektur des Computernetzwerkes,
* den Ausrüstungsstand der Hardware-Ressourcen des Computernetzwerkes,
* Ereignis- und Fehlermeldungen der Hardware-Ressourcen des Computernetzwerkes,
* den Entwicklungsstand oder die Version der Softwareprogramm-Komponenten,
* das Laufzeitverhalten der Softwareprogramm-Komponenten,
* Ereignisse und Fehler der Softwareprogramm-Komponenten,
* den Datenfluss zwischen einzelnen Softwareprogramm-Komponenten und / oder Hardware-Ressourcen des Computernetzwerkes, und/oder
* Einführungs- und Änderungsanforderungen und -informationen zu den Hardware-Ressourcen des Computernetzwerkes oder den Softwareprogramm-Komponenten,
in Form von zeitlichen, räumlichen, funktionalen und/oder strukturellen Deskriptoren erfasst werden, in einer Datenbank gespeichert und in Abhängigkeit von einer Ausgabeformatwahl in einem oder mehreren vereinheitlichten Ausgabeformaten ausgegeben werden; wobei
(i) in der Grobplanung / Strukturierung einer Programm-Komponente und deren Beziehungen zu anderen Programm-Komponenten werden die relevanten (statischen) Daten elektronisch strukturiert und dokumentiert werden;
(ii) bei der Programmierung / Codierung einer Programm-Komponente, einerseits auf diese relevanten Daten zurückgegriffen, und andererseits diese Daten präzisiert und ergänzt werden um Funktionsaufrufe, Parameterübergabe, dynamische Attribute, etc.;
(iii) während der Lebensdauer der Programm-Komponente diese Daten um Versionsinformationen, Laufzeitverhalten, etc. ergänzt werden;
(iv) zur Laufzeit der Programm-Komponente diese Daten herangezogen werden, um das statische und das dynamische Verhalten der Programm-Komponente mit von dieser abgegebenen Log-Datei-Einträgen auszuwerten, zu verifizieren und in der geeigneten Weise auszugeben.

**10.** Verfahren nach Anspruch 9, bei dem erforderliche / verfügbare Informationen über die IT-Assets wie Software, Software-Versionen, die Hardware, die Hardware-Versionen, Datenflüsse, Entwicklungs-Informationen, Überwachungs-Informationen, vereinheitlicht und zur Beherrschung der Komplexität mit ihren jeweiligen Abhängigkeiten innerhalb einer Computer-Programmkomponente Anwendungslandschaft zur Auswertung grafisch darstellt, wobei eine einheitliche, statische oder dynamische Datenstruktur zur Erfassung der IT-Assets und deren Betrieb verwendet.

**11.** Verfahren nach Anspruch 9 oder 10, bei dem Datenströme und Anforderungen hinsichtlich ihres Volumens, ihrer Anfall-/Auftrittseigenschaften und die Abläufe von Programmen automatisch erfasst und überwacht werden um mit den dabei gewonnenen Daten Fehler und Ausfälle zu untersuchen und zu minimieren und Abhängigkeiten zwischen einzelnen Programm-Komponenten und / oder Hardware-Ressourcen des Computernetzwerkes zu erkennen.

**12.** Verfahren nach einem der Ansprüche 9 bis 11, bei dem eine Programm-Komponente, in Abhängigkeit von ihrer Komplexität eine einfache Funktion oder Prozedur, ein technische Komponente, oder dergl. sein, aber auch ein vielschichtiger und anspruchsvoller Geschäftsdienst (Business-Service), der seinerseits auf eine Vielzahl einfacherer Programm-Komponenten zugreift.

**13.** Verfahren nach einem der Ansprüche 9 bis 12, bei dem die Ausgabe in einer die Beziehungen zu / Abhängigkeiten von anderen Ressourcen im Computernetzwerk wiedergebenden Art erfolgt.

**14.** Verfahren nach einem der Ansprüche 9 bis 13, bei dem die Ausgabe eine statische, dynamische, und/oder hierarchische Ausgabe der Zustandsinformationen umfasst.

**15.** Verfahren nach einem der Ansprüche 9 bis 14, bei dem die Kommunikation zwischen der Computer-Programmkomponente Anwendungslandschaft mit den Programm-Komponenten zu den Zustandsinformationen in Stapelverarbeitung und/oder Echtzeit erfolgt.

**16.** Verfahren nach einem der Ansprüche 9 bis 15, bei dem die Programm-Komponente, für die der Computer-Programmkomponente Anwendungslandschaft als Zustandsinformation ein Betriebsfehler kommuniziert wurde, zusammen mit deren abhängigen Computer-Programmkomponenten und / oder deren involvierten Hardware-Ressourcen des Computernetzwerkes angezeigt wird.

**17.** Verfahren nach einem der Ansprüche 9 bis 16, bei dem die Programm-Komponente, für die der Computer-Programmkomponente Anwendungslandschaft als Zustandsinformation ein Benutzerfehler kommuniziert wurde, vorzugsweise zusammen mit deren abhängigen Computer-Programmkomponenten, aktuellen Datensätzen und / oder deren involvierten Hardware-Ressourcen des Computernetzwerkes angezeigt wird.

**18.** Computerprogrammprodukt, welches dazu ausgelegt ist, das Verfahren nach einem der vorhergehenden Ansprüche auszuführen wenn es von einem Computer oder einem Computer-Netzwerk ausgeführt wird.
